# EUROPÄISCHE PATENTSCHRIFT

(11) **EP 1 728 107 B1**
(45) Veröffentlichungstag und Bekanntmachung des Hinweises auf die Patenterteilung: **04.06.2014**
(21) Anmeldenummer: 05735722.0
(22) Anmeldetag: 09.03.2005
(51) Int. Cl.: G02B 6/00

(54) **LEUCHTMODUL ZUR MONTAGE IN EINEM HAUSHALTGERÄT UND HAUSHALTG ERÄT MIT EINEM SOLCHEN**
LUMINOUS MODULE FOR MOUNTING IN A HOUSEHOLD APPLIANCE, AND HOUSEHOLD APPLIANCE COMPRISING THE SAME
MODULE LUMINEUX A MONTER DANS UN APPAREIL ELECTROMENAGER ET APPAREIL ELECTROMENAGER EQUIPE D'UN TEL MODULE LUMINEUX

(30) Priorität: 15.03.2004 DE 102004012541
(43) Veröffentlichungstag der Anmeldung: 06.12.2006
(73) Patentinhaber: BSH Bosch und Siemens Hausgeräte GmbH, 81739 München (DE)
(72) Erfinder: MAYER, Herbert, 93077 Bad Abbach (DE); VETTER, Roland, 89537 Giengen-Sachsenhausen (DE)
(86) Internationale Anmeldenummer: PCT/EP2005/051064
(87) Internationale Veröffentlichungsnummer: WO 2005/091025

(56) Entgegenhaltungen:
- DE-A1- 10 064 118
- DE-U1- 29 717 337
- US-B1- 6 341 440

## Beschreibung

Die vorliegende Erfindung betrifft ein Leuchtmodul zur Montage in einem Haushaltgerät mit einem Gehäuse, das zur Aufnahme eines Leuchtelements ausgebildet ist und in dem ein erster Lichtleiter angeordnet ist, der eine Lichteintrittsfläche aufweist, durch welche von dem Leuchtelement austretendes Licht in den ersten Lichtleiter eintritt, und der eine Lichtaustrittsfläche aufweist, aus der das Licht aus dem Leuchtmodul austritt.

Ein derartiges Leuchtmodul ist aus DE 100 64 118 A1 bekannt. Dort ist ein Haushaltgerät mit einem Markenzeichen beschrieben, bei dem das Markenzeichen aus einem Bauelement oder einer Baugruppe von transparentem oder transluzentem Werkstoff besteht und mit mindestens einer auf der Innenseite des Gehäuses angebrachten Lichtquelle derart verbunden ist, dass die Außenfläche des Markenzeichens bei eingeschalteter Lichtquelle Licht nach vorn abstrahlt. Das bekannte Leuchtmodul muss speziell für den Anwendungsfall angefertigt werden, was bei einer Vielzahl von Hausgeräte-Varianten zu einer ebenso großen Vielzahl von speziell anzufertigenden Leuchtmodul-Varianten führt.

US 6 341 440 offenbart ein Leuchtmodul gemäß dem Oberbegriff Anspruchs 1.

Der vorliegenden Erfindung liegt die Aufgabe zugrunde, ein universell einsetzbares, kostengünstiges Leuchtmodul zur Montage in einem Haushaltgerät anzugeben.

Diese Aufgabe wird durch ein Leuchtmodul mit den Merkmalen von Anspruch 1 gelöst.

Das Leuchtmodul weist ein Gehäuse auf, das zur Aufnahme eines Leuchtelements ausgebildet ist. In dem Gehäuse ist ein erster Lichtleiter aus transparentem oder transluzentem Werkstoff angeordnet, der eine Lichteintrittsfläche und eine Lichtaustrittsfläche aufweist. In die Lichteintrittsfläche tritt von dem Leuchtelement austretendes Licht in den ersten Lichtleiter ein und aus der Lichtaustrittsfläche tritt das Licht aus dem Leuchtmodul aus. Dadurch dass das Gehäuse zur alternativen Aufnahme eines ersten Leuchtelements und eines zweiten, von dem ersten verschiedenen Leuchtelements ausgebildet ist, kann das Leuchtmodul mit einem je nach Situation optimalen Leuchtelement ausgestattet werden, ohne dass sein Gehäuse geändert zu werden braucht.

Bei dem Leuchtmodul kann das erste Leuchtelement zumindest einen zweiten Lichtleiter aufweisen, so dass es möglich ist, Licht durch den zweiten Lichtleiter in das Leuchtmodul zu leiten. Auf diese Weise kann das Leuchtmodul als passives Leuchtmodul an Positionen in einem Haushaltgerät eingesetzt werden, an denen eine elektrische Stromzuführung nicht gewünscht oder nicht möglich ist.

Des weiteren kann das zweite Leuchtelement eine Trägerplatte, insbesondere eine Leiterplatte, mit zumindest einer Lichtquelle aufweisen, so dass Licht direkt in dem Leuchtmodul erzeugt werden kann. Auf diese Weise kann das Leuchtmodul als aktives Leuchtmodul an Positionen in dem Haushaltgerät eingesetzt werden, an denen eine Stromzufuhr problemlos möglich ist.

An dem Gehäuse des Leuchtmoduls ist zumindest ein Funktionselement angeformt. Besonders leicht und kostengünstig kann das Funktionselement an das Gehäuse angeformt werden, wenn das Gehäuse und das Funktionselement aus dem gleichen Kunststoff einstückig gefertigt werden.

Insbesondere ist das Funktionselement als ein Rastelement ausgebildet, mit dem der erste Lichtleiter und/oder das erste Leuchtelement und/oder das zweite Leuchtelement lösbar in dem Gehäuse befestigt ist und/oder mit dem das Leuchtmodul mit einer Modulaufnahme lösbar befestigbar ist. Somit kann das Leuchtmodul auf besonders einfache Weise mit unterschiedlichen ersten Lichtleitern ausgestattet werden, um verschiedene Anzeigen zu ermöglichen. Beispielsweise unterscheiden sich die ersten Lichtleiter durch verschieden ausgebildete Lichtaustrittsseiten, die verschiedene Symbole oder Schriftzeichen aufweisen, die in die Lichtaustrittsseite geformt, an der Lichtaustrittsseite angeformt oder auf die Lichtaustrittsseite aufgedruckt sein können. Die verschiedenen Symbole oder Schriftzeichen können anstatt an der Lichtaustrittsseite auch an anderen Stellen des ersten Lichtleiters ausgebildet sein, wie beispielsweise an einer der Lichtaustrittseite gegenüberliegenden Seite oder im Volumen des ersten Lichtleiters. An den Innenseiten des Gehäuses kann zumindest ein weiteres Rastelement angeformt sein, mit dem das erste und/oder das zweite Leuchtelement in dem Gehäuse befestigt werden kann. Besonders vorteilhaft ist das Rastelement derart ausgebildet, dass sowohl eine Leiterplatte mit einer oder mehreren Leuchtdioden als auch alternativ dazu ein zweiter Lichtleiter in dem Gehäuse befestigt werden kann. Auf diese Weise kann das Leuchtmodul einerseits als aktives Leuchtmodul mit eigener Lichtquelle und andererseits als passives Leuchtmodul mit von einer entfernten Lichtquelle in das Leuchtmodul geleitetem Licht ausgestaltet werden. An der Außenseite des Gehäuses kann zumindest ein weiteres Rastelement angeformt sein, mit dem das Leuchtmodul in einer Modulaufnahme des Haushaltgerätes befestigt werden kann. Auf diese Weise kann die Verbindung zwischen dem Leuchtmodul und der Modulaufnahme leicht wieder gelöst und das Leuchtmodul aus der Modulaufnahme entnommen werden, um es beispielsweise gegen ein anderes auszutauschen oder um einzelne Komponenten des Leuchtmoduls auszutauschen.

Vorteilhafterweise ist das Funktionselement federnd ausgebildet. Insbesondere weist das Gehäuse eine federnde Halterung für das erste und/oder das zweite Leuchtelement auf, so dass das erste und/oder das zweite Leuchtelement durch Biegen der federnden Halterung aus ihrer Ruhelage leicht in dem Gehäuse montiert werden kann.

In einer bevorzugten Ausführungsform weist das Gehäuse zumindest eine Licht reflektierende Innenfläche auf. Auf diese Weise kann die Leuchtkraft des Leuchtmoduls erhöht werden, da Licht, das auf die reflektierende Innenfläche des Gehäuses trifft, von dieser reflektiert anstatt absorbiert wird und somit zur Abstrahlung aus dem Leuchtmodul weiterhin zur Verfügung steht.

Vorteilhafterweise ist der erste Lichtleiter quaderförmig ausgestaltet und weist insbesondere eine Lichtaustrittsfläche auf, die auf der Lichteintrittsfläche senkrecht steht. Auf diese Weise kann der erste Lichtleiter besonders kostengünstig gefertigt werden und die Montage in dem Gehäuse ist besonders leicht möglich.

Gemäß einer bevorzugten Ausführungsform hat das erste Leuchtelement und/oder das zweite Leuchtelement direkten Kontakt mit der Lichteintrittsfläche des ersten Lichtleiters, wodurch die Lichteinkopplung von dem ersten bzw. zweiten Leuchtelement in den ersten Lichtleiter besonders hoch ist.

Um eine möglichst gleichmäßig verteilte Lichtabstrahlung über die Lichtaustrittsfläche des ersten Lichtleiters zu erzielen, weist die Lichtaustrittsfläche und/oder die der Lichtaustrittsfläche gegenüberliegende Fläche des ersten Lichtleiters eine strukturierte Oberfläche auf. Es ist auch möglich, die Lichtaustrittsfläche mit einer Diffusorfolie auszustatten oder den ersten Lichtleiter aus diffusem Material zu fertigen, um eine gleichmäßige Lichtabstrahlung zu erzielen.

Das Leuchtmodul kann in einer Modulaufnahme des Haushaltgerätes insbesondere lösbar befestigt werden, wobei die Modulaufnahme bevorzugt hinter einer Blende des Haushaltgerätes angeordnet ist. Die Modulaufnahme kann aber auch vor oder hinter beliebigen anderen Teilen des Haushaltgerätes angeordnet sein, die beleuchtet werden sollen. Beispielsweise kann die Modulaufnahme durch Rasthaken gebildet sein, die an der Blendenrückseite angeformt sind und die zur Halterung des Leuchtmoduls in Rastösen des Leuchtmoduls eingreifen, die ihrerseits an dem Gehäuse des Leuchtmoduls angeformt sind.

Insbesondere kann die Blende eine Griffplatte für einen am Haushaltgerät beweglichen Gegenstand sein, wie beispielsweise eine Waschmittelschublade oder eine Tür oder eine Haube oder eine Klappe des Haushaltgeräts. Durch Verwendung eines zweiten Lichtleiters zur Lichtzuführung in das Leuchtmodul kann an diesen beweglichen Teilen des Haushaltgeräts eine optische Anzeige realisiert werden, bei denen ein elektrischer Anschluss für das Leuchtmodul schwer zu verwirklichen ist.

Die Erfindung und ihre Weiterbildungen werden nachfolgend anhand von Zeichnungen näher erläutert:

Es zeigen
Fig. 1a eine perspektivische Ansicht eines erfindungsgemäßen Leuchtmoduls ohne Leuchtelement schräg auf die Lichtaustrittsfläche;
Fig. 1b, 1c je einen vergrößerten Ausschnitt des erfindungsgemäßen Leuchtmoduls aus Fig. 1a;
Fig. 2a das Leuchtmodul aus Fig. 1a mit einem zweiten Lichtleiter als Leuchtelement;
Fig. 2b den zweiten Lichtleiter gemäß Fig. 2a;
Fig. 3a das Leuchtmodul aus Fig. 1a mit einer mit vier Leuchtdioden bestückten Leiterplatte als Leuchtelement und mit einer Diffusorfolie über der Lichtaustrittsfläche;
Fig. 3b die Leiterplatte gemäß Fig. 3a;
Fig. 4a eine perspektivische Ansicht der Rückseite einer Blende eines Haushaltgerätes mit dem montierten Leuchtmodul gemäß Fig. 3a schräg von der Rückseite des Leuchtmoduls;
Fig. 4b eine frontseitige Ansicht der Blende gemäß Fig. 4a;
Fig. 5a eine frontseitige Ansicht eines Haushaltgerätes mit einem montierten Leuchtmodul gemäß Fig. 2a;
Fig. 5b, 5c je eine perspektivische Ansicht einer Waschmitteleinspülschale des Haushaltgerätes gemäß Fig. 5a schräg von oben.

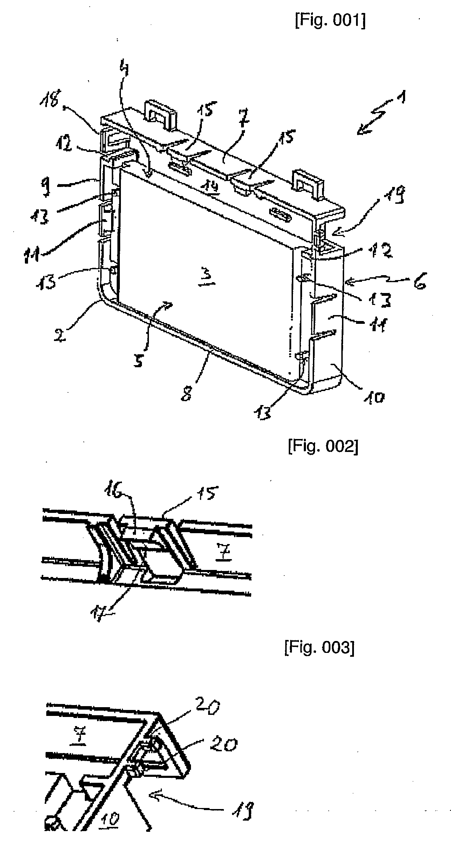

In Figur 1a ist ein erfindungsgemäßes Leuchtmodul 1 mit einem Gehäuse 2 und mit einem in dem Gehäuse 2 angeordneten ersten Lichtleiter 3 gezeigt. Der erste Lichtleiter 3 ist quaderförmig ausgestaltet und weist eine Lichteintrittsfläche 4 und eine Lichtaustrittsfläche 5 auf, wobei die Lichtaustrittsfläche 5 im wesentlichen senkrecht auf der Lichteintrittsfläche 4 steht. Das Gehäuse 2 umfasst den ersten Lichtleiter 3 mit einer der Lichtaustrittsfläche 5 des ersten Lichtleiters 3 gegenüberliegenden Rückwand 6, mit einer der Lichteintrittsfläche 4 benachbart angeordneten ersten Längswand 7, mit einer dieser ersten Längswand 7 gegenüberliegenden zweiten Längswand 8, mit einer die erste Längswand 7 und die zweite Längswand 8 verbindenden ersten Querwand 9 und mit einer der ersten Querwand 9 gegenüberliegenden zweiten Querwand 10. An der Lichtaustrittsfläche 5 des ersten Lichtleiters 3 ist das Gehäuse 2 offen ausgebildet. Die Innenseiten des Gehäuses 2, insbesondere die der Rückwand 6 und der zweiten Längswand 8, können lichtreflektierend ausgebildet sein.

An der ersten Querwand 9 und an der gegenüberliegenden zweiten Querwand 10 sind Rastelemente 11 angeformt, mit denen der erste Lichtleiter 3 in dem Gehäuse 2 gehalten wird. Des weiteren sind zur exakten Positionierung des ersten Lichtleiters 3 in dem Gehäuse 2 an der ersten bzw. der zweiten Querwand 9, 10 Führungselemente 12 angeformt und die Rückwand 6 weist angeformte Stifte 13 auf, die durch Aussparungen des ersten Lichtleiters 3 greifen und auf diese Weise die exakte Position des ersten Lichtleiters 3 bestimmen. Die Rastelemente 11, die Führungselemente 12 und die Stifte 13 sind insbesondere einstückig an dem Gehäuse 2 angeformt.

Innerhalb des Gehäuses 2 ist zwischen der Lichteintrittsfläche 4 des ersten Lichtleiters 3 und der benachbart angeordneten ersten Längswand 7 des Gehäuses 2 ein Aufnahmebereich 14 zur Aufnahme eines Leuchtelements ausgebildet, welches das Leuchtmodul 1 mit Licht versorgen kann. An der ersten Längswand 7 des Gehäuses 2 sind zwei Rastelemente 15 zur Halterung des Leuchtelements angeformt. Eine vergrößerte Darstellung des Rastelements 15 ist in Figur 1b gezeigt. Das Rastelement 15 ist federnd an dem Gehäuse 2 angeformt und weist eine Rastnase 16 auf, die mit einer bogenförmigen Kehle 17 ausgebildet ist. Des weiteren ist an der ersten Querwand 9 des Gehäuses 2 eine federnde Halterung 18 angeformt, die bei einer Montage des Leuchtelements aus ihrer Ruhelage gebogen werden kann. Weiterhin weist das Gehäuse 2 an seiner zweiten Querwand 10 eine Aussparung 19 auf, durch die das Leuchtelement bei der Montage in den Aufnahmebereich 14 gefädelt werden kann. In Figur 1c ist eine vergrößerte Darstellung der zweiten Querwand 10 mit der Aussparung 19 gezeigt. An der Außenseite der zweiten Querwand 10 sind oberhalb der Aussparung 19 zwei Halteelemente 20 angeformt, mit denen bei der Montage des Leuchtelements in dem Leuchtmodul 1 eine genaue Position des Leuchtelements in dem Aufnahmebereich 14 festgelegt werden kann.

In Figur 2a ist das Leuchtmodul 1 gemäß Figur 1a mit einem in dem Aufnahmebereich 14 montierten zweiten Lichtleiter 21 und in Figur 2b ist der zweite Lichtleiter 21 gezeigt. Der zweite Lichtleiter 21 ist stabförmig ausgebildet und weist eine Lichteinkoppelfläche 22, eine der Lichteinkoppelfläche 22 gegenüberliegende Endfläche 23 und eine im rechten Winkel zur Lichteinkoppelfläche 22 bzw. Endfläche 23 angeordnete Lichtauskoppelfläche 24 auf. Die der Lichtauskoppelfläche 24 gegenüberliegende rückseitige Fläche 25 des zweiten Lichtleiters 21 ist gewölbt ausgebildet. Des weiteren ist der zweite Lichtleiter 21 in einen Lichtzuführbereich 26 und einen Lichtabgabebereich 27 unterteilt, wobei der zweite Lichtleiter 21 zwischen diesen beiden Bereichen 26, 27 anschließend an die Lichtauskoppelfläche 24 eine erste Stufe 28 und senkrecht dazu eine zweite Stufe 29 aufweist, durch die der zweite Lichtleiter 21 in dem Aufnahmebereich 14 des Gehäuses 2 gehalten werden kann. Der zweite Lichtleiter 21 kann mit Ausnahme der Lichteinkoppelfläche 22 und der Lichtauskoppelfläche 24 mit einer lichtreflektierenden und/oder lichtundurchlässigen Schicht überzogen sein, damit Licht, das von einer Lichtquelle (nicht gezeigt) in die Lichteinkoppelfläche 22 des zweiten Lichtleiters 21 eintritt nur aus der Lichtauskoppelfläche 24 wieder austreten kann.

Bei der Montage des zweiten Lichtleiters in den Aufnahmebereich 14 des Leuchtmoduls 1 gemäß Figur 1a und Figur 2a, wird der zweite Lichtleiter 21 mit seinem Lichtzuführbereich 27 durch die Aussparung 19 des Gehäuses 2 gefädelt, so dass der Lichtzuführbereich 27 seitwärts aus dem Gehäuse 2 ragt. Die Rastelemente 15 werden aus ihrer Ruhelage gebogen und der zweite Lichtleiter 21 derart in den Aufnahmebereich 14 hineingedrückt, dass die Lichtauskoppelfläche 24 in direkten Kontakt mit der Lichteintrittsfläche 4 des ersten Lichtleiters 3 zu liegen kommt. Bei montiertem zweiten Lichtleiter umschließen die Rastelemente 15 jeweils mit der bogenförmigen Kehle 17 ihrer Rastnasen 16 formschlüssig die gewölbte rückseitige Fläche 25 des zweiten Lichtleiters 21. Der zweite Lichtleiter 21 liegt mit seiner Endfläche 23 und seiner ersten Stufe 28 an den Führungselementen 12 des Gehäuses 2 und mit seiner zweiten Stufe 29 an der zweiten Querwand 10 oberhalb der Aussparung 19 an und ist auf diese Weise in dem Aufnahmebereich 14 des Gehäuses 2 fixiert.

Der zweite Lichtleiter 21 kann ein eigenes Gehäuse aufweisen und beispielsweise als Zweikomponenten-Spritzgussteil gefertigt sein. Des weiteren kann der zweite Lichtleiter 21 aus mehreren zweiten Einzellichtleitern zusammengesetzt sein, die beispielsweise durch ein gemeinsames Gehäuse zusammengehalten oder einzeln in den Aufnahmebereich 14 des Leuchtmoduls 1 eingefügt und dort gehalten werden. Die zweiten Einzellichtleiter können verschiedenen Lichtquellen zugeordnet sein, die Licht zu verschiedenen Zeitpunkten und/oder in verschiedenen Farben abstrahlen können, oder die zweiten Einzellichtleiter können bei Lichtquellen gleicher Lichtfärbung unterschiedlich eingefärbt sein. Des weiteren kann auch der erste Lichtleiter 3 in dem Gehäuse 2 aus mehreren ersten Einzellichtleitern zusammengesetzt sein, die mit ihren Lichtaustrittsflächen 5 nebeneinander oder hintereinander angeordnet sind, wobei die ersten Einzellichtleiter unterschiedliche Symbole und/oder Schriftzeichen und/oder Farben aufweisen können. Somit ist es möglich, jedem der ersten Einzellichtleiter einen zweiten Einzellichtleiter zuzuordnen, wodurch jeder der ersten Einzellichtleiter separat mit Licht versorgt werden kann.

In Figur 3a ist das Leuchtmodul 1 gemäß Figur 1 a mit einer in dem Aufnahmebereich 14 montierten Trägerplatte 30 und in Figur 3b ist die Trägerplatte 30 gezeigt. Die Trägerplatte 30 ist als stabförmige Leiterplatte ausgebildet und in ihrem Lichtabgabebereich 31 mit vier Leuchtdioden 32 bestückt. Die Trägerplatte 30 weist an ihrem einen Ende einen Kontaktbereich 33 für elektrische Anschlüsse auf. Des weiteren ist die Trägerplatte 30 an ihrem dem Kontaktbereich 33 gegenüberliegenden Ende mit einer Einkerbung 34 und zwischen Lichtabgabebereich 31 und Kontaktbereich 33 mit einer Nut 35 versehen.

Bei der Montage der Trägerplatte 30 in den Aufnahmebereich 14 des Leuchtmoduls 1 gemäß Figur 1a und 3a, wird die Trägerplatte 30 mit ihrem Kontaktbereich 33 durch die Aussparung 19 des Gehäuses 2 gefädelt, so dass der Kontaktbereich 33 zur leichten elektrischen Kontaktierung seitlich aus dem Gehäuse 2 ragt. Die federnde Halterung 18 wird aus ihrer Ruhelage gebogen und die Trägerplatte 30 derart in den Aufnahmebereich 14 hineingedrückt, dass die Leuchtdioden 32 in direkten Kontakt mit der Lichteintrittsfläche 4 des ersten Lichtleiters zu liegen kommen. Bei montierter Trägerplatte 30 ist die Halterung 18 in die Einkerbung 34 der Trägerplatte 30 und die Trägerplatte 30 mit ihrer Nut 35 in die Querwand 10 oberhalb der Aussparung 19 zwischen den zwei Halteelementen 20 eingerastet, so dass die Trägerplatte 30 auf diese Weise in dem Aufnahmebereich 14 des Gehäuses 2 fixiert ist.

Die Trägerplatte 30 kann als starre oder flexible Leiterplatte ausgebildet sein. Die Leuchtdioden 32 können Licht zu unterschiedlichen Zeitpunkten und/oder in unter-schiedlichen Farben abstrahlen. Des weiteren kann der erste Lichtleiter 3 in dem Gehäuse 2 aus mehreren ersten Einzellichtleitern zusammengesetzt sein, die mit ihren Lichtaustrittsflächen 5 nebeneinander oder hintereinander angeordnet sind, wobei die ersten Einzellichtleiter unterschiedliche Symbole und/oder Schriftzeichen und/oder Farben aufweisen können. Somit ist es möglich, jedem der ersten Einzellichtleiter eine Leuchtdiode 32 zuzuordnen, wodurch jeder der ersten Einzellichtleiter separat mit Licht versorgt werden kann. Um eine über die gesamte Lichtaustrittsfläche 5 gleichmäßig verteilte Lichtabstrahlung zu erzielen, kann über der Lichtaustrittsfläche 5 des ersten Lichtleiters 3 eine Diffusorfolie 36 angebracht sein, die durch die Stifte 13 fixiert ist. Alternativ dazu kann der erste Lichtleiter 3 aus Material gefertigt sein, welches eingetretenes Licht diffus streut.

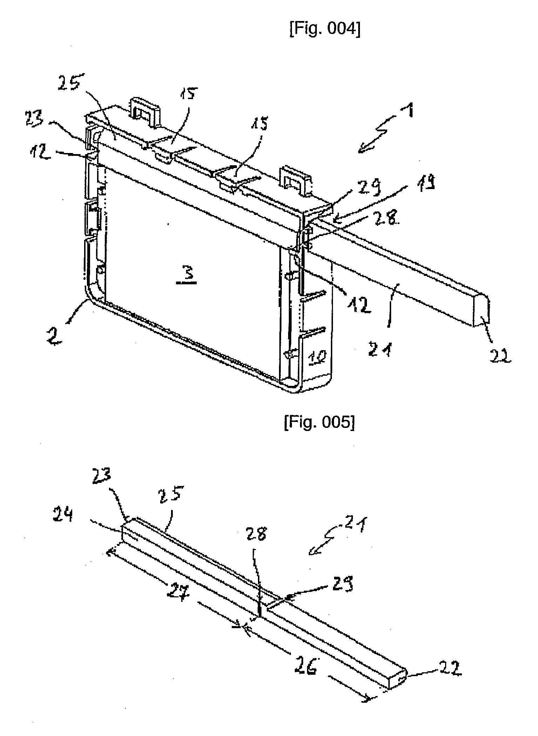

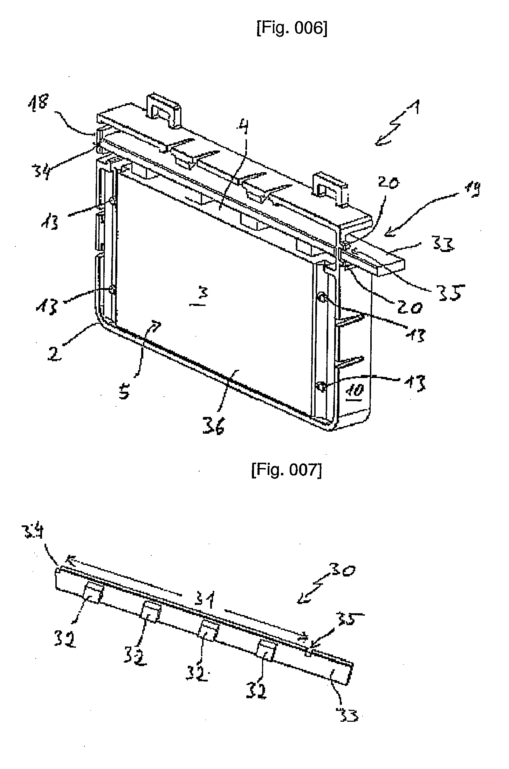

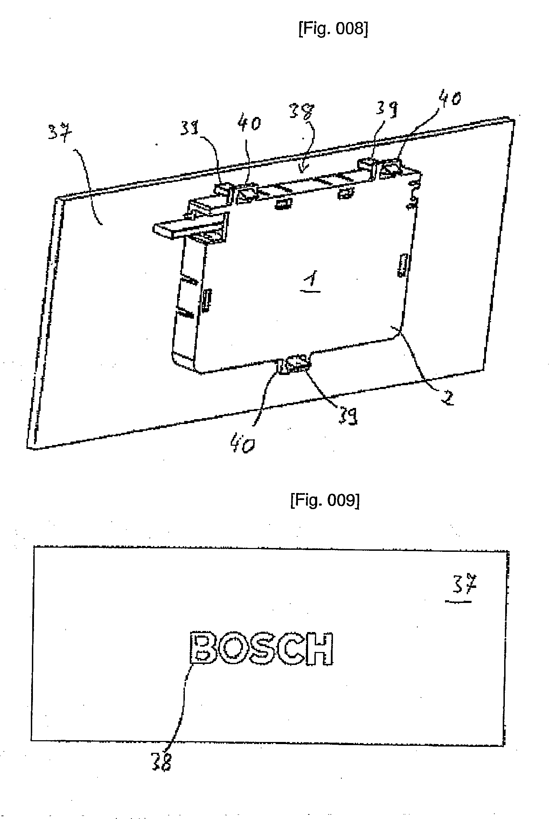

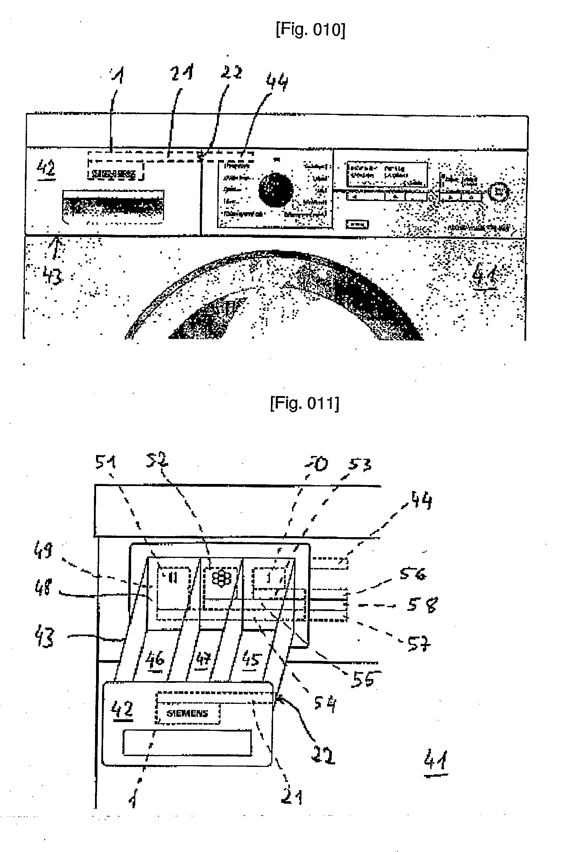

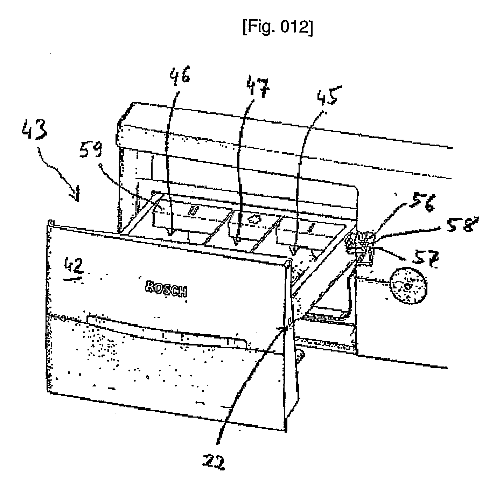

In Figur 4a ist eine perspektivische Ansicht einer Blende 37 eines Haushaltgerätes mit dem montierten Leuchtmodul 1 gemäß Fig. 3a schräg von der Rückseite des Leuchtmoduls 1 gezeigt. An der Rückseite der Blende 37 ist eine Modulaufnahme 38 durch drei an der Blende 37 angeformte Rasthaken 39 gebildet. Die Rasthaken 39 greifen durch Rastösen 40, die an dem Gehäuse 2 des Leuchtmoduls 1 angeformt sind, wodurch das Leuchtmodul 1 einerseits in der Modulaufnahme 38 gehalten wird und andererseits leicht aus der Modulaufnahme 38 wieder gelöst werden kann.

In Figur 4b ist eine frontseitige Ansicht der Blende 37 gemäß Fig. 4a gezeigt. Die Blende 37 weist Aussparungen 38 in Form eines Schriftzugs auf, durch die Licht des Leuchtmoduls 1 abgestrahlt werden kann. Die Aussparungen 38 können mit lichtdurchlässigem Material ausgefüllt sein oder alternativ kann der Schriftzug kongruent zu den Aussparungen 38 auf der Lichtaustrittsfläche 5 des ersten Lichtleiters 3 erhaben ausgebildet sein, so dass bei in der Modulaufnahme 38 montiertem Leuchtmodul 1 der erhaben ausgebildete Schriftzug die Aussparungen 38 der Blende 37 durchdringt und mit der Blende 37 eine plane Frontfläche bildet.

In Figur 5a ist die obere Frontansicht einer Waschmaschine 41 gezeigt mit einer Griffplatte 42 einer Waschmitteleinspülschale 43, hinter der das Leuchtmodul 1 gemäß Figur 2a montiert ist. Die Position des Leuchtmoduls 1 mit dem zweiten Lichtleiter 21 ist gestrichelt angedeutet. Der zweite Lichtleiter 21 ist bei geschlossener Waschmitteleinspülschale 43 mit seiner Lichteinkoppelfläche 22 an eine Lichtquelle 44 der Waschmaschine 41 angekoppelt, so dass das Leuchtmodul 1 mit Licht versorgt wird und das Markenzeichen "SIEMENS" auf der Griffplatte 42 der Waschmitteleinspülschale 43 aufleuchten kann.

In Figur 5b ist schematisch die Waschmitteleinspülschale 43 in ausgezogenem Zustand gezeigt, so dass eine erste Kammer 45 zur Aufnahme von Waschmittel für die Vorwäsche, eine zweite Kammer 46 zur Aufnahme von Waschmittel für die Hauptwäsche und eine dritte Kammer 47 zur Aufnahme von Weichspülmittel sichtbar sind. Hinter der Rückwand 48 der Waschmitteleinspülschale 43 ist ein zweites Leuchtmodul 49 befestigt. Das zweite Leuchtmodul 49 weist einen ersten Lichtleiter 3 auf, der aus einem ersten Lichtabstrahlelement 50 für die erste Kammer 45, einem zweiten Lichtabstrahlelement 51 für die zweite Kammer 46 und einem dritten Lichtabstrahlelement 52 für die dritte Kammer 47 besteht, die nebeneinander in dem Leuchtmodul 49 angeordnet sind. Das zweite Leuchtmodul 49 weist einen zweiten Lichtleiter 21 auf, der aus einem ersten Lichtleitelement 53 zur Lichtversorgung des ersten Lichtabstrahlelements 50, einem zweiten Lichtleitelement 54 zur Lichtversorgung des zweiten Lichtabstrahlelements 51 und einem dritten Lichtleitelement 55 zur Lichtversorgung des dritten Lichtabstrahlelements 52 besteht. Die Positionen des ersten, zweiten und dritten Lichtabstrahlelements 50, 51 und 52 mit den ersten, zweiten und dritten Lichtleitelementen 53, 54 und 55 sind in Figur 5b gestrichelt angedeutet.

Die Rückwand 48 der Waschmitteleinspülschale 43 weist für die erste Kammer 45 eine Aussparung in Form eines Symbols für Vorwäsche "I", für die zweite Kammer 46 eine Aussparung in Form eines Symbols für Hauptwäsche "II" und für die dritte Kammer 47 eine Aussparung in Form eines Symbols für Weichspülen "*" auf, durch die Licht des Leuchtmoduls 49 abgestrahlt werden kann. Bei vollständig geöffneter Waschmitteleinspülschale 43 koppelt das erste Lichtleitelement 53 an eine erste Lichtquelle 56, das zweite Lichtleitelement 54 an eine zweite Lichtquelle 57 und das dritte Lichtleitelement 55 an eine dritte Lichtquelle 58, so dass das erste, zweite und dritte Lichtabstrahlelement 50, 51 und 52 unabhängig voneinander mit Licht versorgt werden können. Die erste, zweite und dritte Lichtquelle 56, 57 und 58 können beispielsweise verschieden farbige Leuchtdioden, Glühlampen oder wiederum Lichtleiter sein, die Licht von einer entfernt angeordneten Lichtquelle übertragen. Je nach eingestelltem Waschprogramm können die erste, zweite und dritte Lichtquelle von einer Waschmaschinensteuerung (nicht gezeigt) vor dem Start des Waschprogramms bei vollständig geöffneter Waschmitteleinspülschale 43 unabhängig voneinander eingeschaltet werden. Auf diese Weise leuchtet das Symbol für Vorwäsche "I" an der Rückwand 48 der Waschmitteleinspülschale 43 nur dann auf, wenn ein Waschprogramm mit Vorwäsche gewählt ist, so dass einem Benutzer angezeigt wird, ob die erste Kammer 45 mit Waschmittel gefüllt werden muss oder nicht. Gleiches gilt für die Anzeige des Symbols für das Weichspülmittel.

In Figur 5c ist eine alternative Ausführung der Waschmitteleinspülschale 43 gezeigt. Von dem hinter der Griffplatte 42 der Waschmitteleinspülschale 43 montierten Leuchtmodul 1 ist seitlich an der Waschmitteleinspülschale 43 die Lichteinkoppelfläche 22 gezeigt, in die bei geschlossenen Waschmitteleinspülschale 43 Licht von der ersten, zweiten und dritten Lichtquelle 56, 57 und 58 einkoppeln kann. Am hinteren, oberen Ende der Waschmitteleinspülschale 43 ist vor der Rückwand 48 eine zur Front der Waschmaschine 41 leicht geneigte Blende 59 ausgebildet. Diese zu einem Betrachter geneigte Blende weist für die erste Kammer 45 die Aussparung in F orm des Symbols für Vorwäsche "I", für die zweite Kammer 46 die Aussparung in Form des Symbols für Hauptwäsche "II" und für die dritte Kammer 47 die Aussparung in Form des Symbols für Weichspülen "*" auf, so dass die Symbole für den Benutzer gut sichtbar sind. Das zweite Leuchtmodul 49 ist hinter dieser geneigten Blende 59 montiert, so dass bei geöffneter Waschmitteleinspülschale 43 das Licht der Symbole in Richtung auf einen vor der Waschmaschine 41 stehenden Betrachter abgestrahlt wird.

### Bezugszeichenliste

1 Leuchtmodul
2 Gehäuse
3 Erster Lichtleiter
Lichteintrittsfläche
5 Lichtaustrittsfläche
6 Rückwand des Gehäuses
7 Erste Längswand des Gehäuses
8 Zweite Längswand des Gehäuses
9 Erste Querwand des Gehäuses
10 Zweite Querwand des Gehäuses
11 Rastelement
12 Führungselement
13 Stift
14 Aufnahmebereich für ein Leuchtelement
15 Rastelement
16 Rastnase
17 Bogenförmige Kehle der Rastnase
18 Federnde Halterung
19 Aussparung
20 Halteelement
21 Zweiter Lichtleiter
22 Lichteinkoppelfläche
23 Endfläche
24 Lichtauskoppelfläche
25 Rückseitige Fläche des zweiten Lichtleiters
26 Lichtzuführbereich
27 Lichtabgabebereich
28 Erste Stufe
29 Zweite Stufe
30 Trägerplatte
31 Lichtabgabebereich
32 Leuchtdiode
33 Kontaktbereich
34 Einkerbung
35 Nut
36 Diffusorfolie
37 Blende
38 Modulaufnahme
39 Rasthaken
40 Rastöse
41 Waschmaschine
42 Griffplatte
43 Waschmitteleinspülschale
44 Lichtquelle
45 Erste Kammer
46 Zweite Kammer
47 Dritte Kammer
48 Rückwand der Waschmitteleinspülschale
49 Leuchtmodul
50 Erstes Lichtabstrahlelement
51 Zweites Lichtabstrahlelement
52 Drittes Lichtabstrahlelement
53 Erstes Lichtleitelement
54 Zweites Lichtleitelement
55 Drittes Lichtleitelement
56 Erste Lichtquelle
57 Zweite Lichtquelle
58 Dritte Lichtquelle
59 Geneigte Blende

## Patentansprüche

1. Leuchtmodul zur Montage in einem Haushaltgerät (41) mit einem Leuchtelement (21, 30) und mit einem Gehäuse (2), das zur Aufnahme des Leuchtelements (21, 30) ausgebildet ist und in dem ein erster Lichtleiter (3) angeordnet ist, der eine Lichteintrittsfläche (4) aufweist, durch welche von dem Leuchtelement (21, 30) austretendes Licht in den ersten Lichtleiter (3) eintritt, und der eine Lichtaustrittsfläche (5) aufweist, aus der das Licht aus dem Leuchtmodul (1) austritt, **dadurch gekennzeichnet, dass** das Leuchtelement ein erstes Leuchtelement (21) oder ein zweites, von dem ersten verschiedenes Leuchtelement (30) ist, dass das Gehäuse (2) zur alternativen Aufnahme des ersten Leuchtelements (21) und des zweiten Leuchtelements (30) ausgebildet ist, so dass das Leuchtmodul mit aufgenommenem ersten Leuchtelement (21) ein passives Leuchtmodul und mit aufgenommenem zweiten Leuchtelement (30) ein aktives Leuchtmodul ist.

2. Leuchtmodul nach Anspruch 1, **dadurch gekennzeichnet, dass** das erste Leuchtelement zumindest einen zweiten Lichtleiter (21) aufweist.

3. Leuchtmodul nach Anspruch 1 oder 2, **dadurch gekennzeichnet, dass** das zweite Leuchtelement eine Trägerplatte (30) mit zumindest einer Lichtquelle (32) aufweist.

4. Leuchtmodul nach Anspruch 3, **dadurch gekennzeichnet, dass** die Trägerplatte (30) eine Leiterplatte ist.

5. Leuchtmodul nach einem der vorhergehenden Ansprüche, **dadurch gekennzeichnet, dass** das Gehäuse (2) einstückig ausgebildet ist.

6. Leuchtmodul nach einem der vorhergehenden Ansprüche, **dadurch gekennzeichnet, dass** das Gehäuse (2) als Kunststoffformteil ausgebildet ist.

7. Leuchtmodul nach einem der vorhergehenden Ansprüche, **dadurch gekennzeichnet, dass** an dem Gehäuse (2) zumindest ein Funktionselement (11, 12, 13, 15, 18, 20, 40) angeformt ist.

8. Leuchtmodul nach Anspruch 7, **dadurch gekennzeichnet, dass** das Funktionselement (11, 15, 18, 20, 40) als ein Rastelement ausgebildet ist, mit dem der erste Lichtleiter (3) und/oder das erste Leuchtelement (21) und/oder das zweite Leuchtelement (30) lösbar in dem Gehäuse (2) befestigt ist und/oder mit dem das Leuchtmodul (1) mit einer Modulaufnahme (38) lösbar befestigbar ist.

9. Leuchtmodul nach Anspruch 7 oder 8, **dadurch gekennzeichnet, dass** das Funktionselement (11, 15, 18) federnd ausgebildet ist.

10. Leuchtmodul nach einem der vorhergehenden Ansprüche, **dadurch gekennzeichnet, dass** das Gehäuse (2) zumindest eine Licht reflektierende Innenfläche aufweist.

11. Leuchtmodul nach einem der vorhergehenden Ansprüche, **dadurch gekennzeichnet, dass** der erste Lichtleiter (3) quaderförmig ist.

12. Leuchtmodul nach Anspruch 11, **dadurch gekennzeichnet, dass** die Lichtaustrittsfläche (5) und die Lichteintrittsfläche (4) des ersten Lichtleiters (3) senkrecht aufeinander stehen.

13. Leuchtmodul nach einem der vorhergehenden Ansprüche, **dadurch gekennzeichnet, dass** das erste Leuchtelement (21) und/oder das zweite Leuchtelement (30) direkten Kontakt mit der Lichteintrittsfläche (4) hat.

14. Leuchtmodul nach einem der vorhergehenden Ansprüche, **dadurch gekennzeichnet, dass** die Lichtaustrittsfläche (5) und/oder die der Lichtaustrittsfläche (5) gegenüberliegende Fläche des ersten Lichtleiters (3) eine strukturierte Oberfläche aufweist.

15. Haushaltgerät mit zumindest einem Leuchtmodul (1, 49) nach einem der Ansprüche 1 bis 14, **dadurch gekennzeichnet, dass** das Leuchtmodul (1, 49) in einer Modulaufnahme (38) des Haushaltgerätes (41) befestigt ist.

16. Haushaltgerät nach Anspruch 15, **dadurch gekennzeichnet, dass** das Leuchtmodul (1, 49) in der Modulaufnahme (38) lösbar befestigt ist.

17. Haushaltgerät nach Anspruch 15 oder 16, **dadurch gekennzeichnet, dass** die Modul-aufnahme (38) hinter einer Blende (37, 42, 48, 59) des Haushaltgerätes (41) angeordnet ist.

18. Haushaltgerät nach Anspruch 17, **dadurch gekennzeichnet, dass** die Blende (37) eine Griffplatte (42) für einen am Haushaltgerät (41) beweglichen Gegenstand ist.

19. Haushaltgerät nach Anspruch 18, **dadurch gekennzeichnet, dass** der bewegliche Gegenstand eine Waschmitteleinspülschale (43) oder eine Tür oder eine Haube oder eine Klappe ist.

## Claims

1. Luminous module for mounting in a household appliance (41), having a luminous element (21, 30) and a housing (2) that is embodied to receive a luminous element (21, 30) and contains a first optical waveguide (3) comprising a light admission surface (4) via which light emitted by the luminous element (21, 30) enters the first optical waveguide (3), and which has a light output surface (5) from which the light emerges from the luminous module (1), **characterised in that** the luminous element is a first luminous element (21) or a second luminous element (30) different from the first, that the housing (2) is embodied to alternatively receive the first luminous element (21) and the second luminous element (30), so that when a first luminous element (21) is received the luminous module is a passive luminous module and when a second luminous element (30) is received is an active luminous module.

2. Luminous module according to claim 1, **characterised in that** the first luminous element has at least one second optical waveguide (21).

3. Luminous module according to claim 1 or 2, **characterised in that** the second luminous element is a carrier plate (30) having at least one light source (32).

4. Luminous module according to claim 3, **characterised in that** the carrier plate (30) is a printed circuit board.

5. Luminous module according to one of the preceding claims, **characterised in that** the housing (2) is integrally embodied.

6. Luminous module according to one of the preceding claims, **characterised in that** the housing is embodied (2) as a plastic moulded part.

7. Luminous module according to one of the preceding claims, **characterised in that** at least one functional element (11, 12, 13, 15, 18, 20, 40) is integrally moulded on the housing (2).

8. Luminous module according to claim 7, **characterised in that** the functional element (11, 15, 18, 20, 40) is embodied as a locking element, to which the first optical waveguide (3) and/or the first luminous element (21) and/or the second luminous element (30) is detachably attached in the housing (2) and/or with which the luminous module (1) can be releasably attached to a module receptacle (38).

9. Luminous module according to claim 7 or 8, **characterised in that** the functional element (11, 15, 18) is embodied to be spring-loaded.

10. Luminous module according to one of the preceding claims, **characterised in that** the housing (2) has at least one light-reflecting inner surface.

11. Luminous module according to one of the preceding claims, **characterised in that** the first optical waveguide (3) is rectangular.

12. Luminous module according to claim 11, **characterised in that** the light output surface (5) and the light admission surface (4) of the first optical waveguide (3) are perpendicular to one another.

13. Luminous module according to one of the preceding claims, **characterised in that** the first luminous element (21) and/or the second luminous element (30) has direct contact with the light admission surface (4).

14. Luminous module according to one of the preceding claims, **characterised in that** the light output surface (5) and/or the surface of the first optical waveguide (3) opposite the light output surface (5) has a structured surface.

15. Domestic appliance having at least one luminous module (1, 49) according to one of claims 1 to 14, **characterised in that** the luminous module (1, 49) is attached in a module receptacle (38) of the domestic appliance (41).

16. Domestic appliance according to claim 15, **characterised in that** the luminous module (1, 49) is detachably attached to the module receptacle (38).

17. Domestic appliance according to claim 15 or 16, **characterised in that** the module receptacle (38) is arranged behind a panel (37, 42, 48, 59) of the domestic appliance (41).

18. Domestic appliance according to claim 17, **characterised in that** the panel (37) is a handle plate (42) for an object which can be moved on the domestic appliance (41).

19. Domestic appliance according to claim 18, **characterised in that** the movable object is a detergent dispenser tray (43) or a door or a hood or a hatch.

## Revendications

1. Module d'éclairage destiné au montage dans un appareil ménager (41), comprenant un élément lumineux (21, 30) et un boîtier (2) qui est exécuté pour recevoir l'élément lumineux (21, 30) et dans lequel est disposé un premier guide de lumière (3) qui présente une face d'entrée de la lumière (4) à travers laquelle la lumière émise par l'élément lumineux (21, 30) entre dans le premier guide de lumière (3) et qui présente une face de sortie de la lumière (5) par laquelle la lumière sort du module d'éclairage (1), **caractérisé en ce que** l'élément lumineux est un premier élément lumineux (21) ou un second élément lumineux (30), différent du premier, **en ce que** le boîtier (2) est exécuté pour recevoir le premier élément lumineux (21) et le second élément lumineux (30) en alternance, de sorte que le module d'éclairage est un module d'éclairage passif lorsqu'il contient le premier élément lumineux (21) et un module d'éclairage actif lorsqu'il contient le second élément lumineux (30).

2. Module d'éclairage selon la revendication 1, **caractérisé en ce que** le premier élément lumineux comprend au moins un second guide de lumière (21).

3. Module d'éclairage selon la revendication 1 ou 2, **caractérisé en ce que** le second élément lumineux comprend une plaque de support (30) avec au moins une source lumineuse (32).

4. Module d'éclairage selon la revendication 3, **caractérisé en ce que** la plaque de support (30) est une carte imprimée.

5. Module d'éclairage selon l'une des revendications précédentes, **caractérisé en ce que** le boîtier (2) est exécuté d'une seule pièce.

6. Module d'éclairage selon l'une des revendications précédentes, **caractérisé en ce que** le boîtier (2) est exécuté en tant que pièce moulée en plastique.

7. Module d'éclairage selon l'une des revendications précédentes, **caractérisé en ce qu'**au moins un élément fonctionnel (11, 12, 13, 15, 18, 20, 40) est formé sur le boîtier (2).

8. Module d'éclairage selon la revendication 7, **caractérisé en ce que** l'élément fonctionnel (11, 15, 18, 20, 40) est exécuté en tant qu'élément d'encliquetage grâce auquel le premier guide de lumière (3) et/ou le premier élément lumineux (21) et/ou le second élément lumineux (30) est/sont fixé/s de manière détachable dans le boîtier (2) et/ou grâce auquel le module d'éclairage (1) peut être fixé de manière amovible à un logement de module (38).

9. Module d'éclairage selon la revendication 7 ou 8, **caractérisé en ce que** l'élément fonctionnel (11, 15, 18) est exécuté de manière élastique.

10. Module d'éclairage selon l'une des revendications précédentes, **caractérisé en ce que** le boîtier (2) est pourvu d'au moins une surface intérieure réfléchissant la lumière.

11. Module d'éclairage selon l'une des revendications précédentes, **caractérisé en ce que** le premier guide de lumière (3) est parallélépipédique.

12. Module d'éclairage selon la revendication 11, **caractérisé en ce que** la face de sortie de la lumière (5) et la face d'entrée de la lumière (4) du premier guide de lumière (3) sont perpendiculaires l'une à l'autre.

13. Module d'éclairage selon l'une des revendications précédentes, **caractérisé en ce que** le premier élément lumineux (21) et/ou le second élément lumineux (30) est/sont en contact direct avec la face d'entrée de la lumière (4).

14. Module d'éclairage selon l'une des revendications précédentes, **caractérisé en ce que** la face de sortie de la lumière (5) et/ou la face du premier guide de lumière (3) opposée à la face de sortie de la lumière (5) a/ont une surface structurée.

15. Appareil ménager comprenant au moins un module d'éclairage (1, 49) selon l'une des revendications 1 à 14, **caractérisé en ce que** le module d'éclairage (1, 49) est fixé dans un logement de module (38) de l'appareil ménager (41).

16. Appareil ménager selon la revendication 15, **caractérisé en ce que** le module d'éclairage (1, 49) est fixé de manière amovible dans le logement de module (38).

17. Appareil ménager selon la revendication 15 ou 16, **caractérisé en ce que** le logement de module (38) est situé derrière un cache (37, 42, 48, 59) de l'appareil ménager (41).

18. Appareil ménager selon la revendication 17, **caractérisé en ce que** le cache (37) est une plaque de préhension (42) pour un objet mobile faisant partie de l'appareil ménager (41).

19. Appareil ménager selon la revendication 18, **caractérisé en ce que** l'objet mobile est un tiroir à lessive (43) ou une porte ou un capot ou une trappe.
